# EUROPEAN PATENT APPLICATION

(11) **EP 4 822 668 A1**
(43) Date of publication of application: **14.10.2026**
(21) Application number: 26171541.1
(22) Date of filing: 09.04.2026
(51) Int. Cl.: G08B 21/10, G01C 13/00, G01S 15/89, G01V 1/01

(54) **GLACIAL LAKE OUTBURST FLOOD MONITORING AND EARLY WARNING SYSTEM**

(30) Priority: 09.04.2025 IN 202441076543
(71) Applicant: Centre for Development of Advanced Computing (CDAC), Kerala 695033 (IN)
(72) Inventor: SASIDHARAN, Vishnu, 695033 Thiruvananthapuram, Kerala (IN); CHANDRASEKHARAN, Harikrishnan, 695033 Thiruvananthapuram, Kerala (IN); SATHYAN, ANISH, 695033 Thiruvananthapuram, Kerala (IN); HARIKUMAR, Divya Minilekshmi, 695033 Thiruvananthapuram, Kerala (IN); RAMACHANDRAN, Rajesh Kalluvettamkuzhi, 695033 Thiruvananthapuram, Kerala (IN); LAL, Karthik, 695033 Thiruvananthapuram, Kerala (IN); PRAKASH, Nithin, 695033 Thiruvananthapuram, Kerala (IN); SAJU, Aravind, 695033 Thiruvananthapuram, Kerala (IN); SANDHYA, Pranav Manilal, 695033 Thiruvananthapuram, Kerala (IN)
(74) Representative: Kador & Partner Part mbB

(57) **Abstract**

A glacial lake outburst flood monitoring and early warning system comprises an echo sounder configured to transmit sound waves toward a bottom of a glacial lake and measure time taken for an echo to return, providing depth measurements indicative of water level changes. A navigation sensor unit monitors orientation of a buoy and provides orientation data including pitch, roll, and heading information. An acoustic sensor unit detects acoustic events occurring near the glacial lake. A data concentrator and processing unit receives data from the echo sounder, the navigation sensor unit, and the acoustic sensor unit, processes the received data, and evaluates variations in the received data to determine a likelihood of a glacial lake outburst flood event. A wireless transmission unit transmits data from the data concentrator and processing unit to a warning and console unit.

## Description

### TECHNICAL FIELD

The present disclosure relates to disaster monitoring and early warning systems, and more particularly to a multi-sensor instrumented buoy system for glacial lake outburst flood monitoring, prediction, and early warning using acoustic technology and embedded electronics.

### BACKGROUND

The information disclosed in this background section is only for enhancement of understanding of the general background of the disclosure and should not be taken as an acknowledgement or any form of suggestion that this information forms the prior art already known to a person skilled in the art.

Glacial lakes are bodies of water that form as glaciers retreat, often bounded by loosely consolidated glacial deposits called moraines, glacial ice dams, or moraines with ice cores. These lakes are frequently surrounded by unstable slopes or hanging glaciers. When glaciers melt due to climate change, water accumulates in these glacial lakes behind naturally formed dams made of ice, sand, pebbles, and ice residue.

The structural integrity of moraine dams can be compromised by various triggering mechanisms, including ice avalanches, debris flows, rockfall, earthquakes, or landslides reaching the lake. Mass movements into a lake due to slope failure may cause impulse waves that overtop the moraine or ice dam, leading to dam failure. When such failure occurs, there can be a sudden high-magnitude discharge of water with high velocity from the glacial lake, flooding downstream areas. This phenomenon, known as a Glacial Lake Outburst Flood (GLOF), can release millions of cubic meters of water over periods ranging from minutes to days, causing extreme downstream flooding with peak flows recorded as high as 15,000 cubic meters per second.

GLOFs pose a significant threat to downstream communities, infrastructure, and livelihoods in high mountain regions around the world. The risk of catastrophic GLOF events has increased in recent decades due to rising global temperatures, which have accelerated glacier melting and retreat. Consequently, glacial lakes have generally increased in both number and size, indicating heightened damage potential. Due to extreme climate conditions and remote locations, periodic field investigations and monitoring of glacial lakes present considerable challenges.

Early warning systems serve as tools in disaster preparedness and response, helping communities handle emergencies with greater confidence and efficiency. The traditional framework of early warning systems generally encompasses monitoring of precursors, forecasting of probable events, and notification of warnings or alerts before an event takes place. However, existing approaches to GLOF monitoring and warning face various challenges, including data transmission difficulties, connectivity problems, power outages in remote locations, limited regional coverage, and requirements for skilled personnel for operation and maintenance.

Therefore, improved systems and methods for monitoring glacial lakes and providing early warning of potential GLOF events are desired.

### SUMMARY

According to an aspect of the present disclosure, a portable electronic system is provided. The portable electronic system includes an echosounder sensor unit, a navigation and buoy orientation unit, an acoustic sensor and processing unit, a geo-location unit, a data concentrator and processing unit, and a wireless transmission unit.

According to other aspects of the present disclosure, the portable electronic system may include one or more of the following features. The electronic system may be a glacial lake outburst flood early warning system comprising hardware parts and firmware parts. The electronic system may be an embedded platform capable of maintaining reliable operation across low-temperature environments. The electronic system may be a low-power embedded platform that utilizes sleep-mode power management techniques to minimize energy consumption during idle periods. The electronic system may be a redundant embedded system wherein an auxiliary or backup card takes control should a primary card fail, thereby increasing reliability of the system.

According to other aspects of the present disclosure, the electronic system may be capable of receiving data packets from multiple sensors including an echosounder, GPS, compass, and environmental sensors in real-time. The electronic system may be capable of deciphering and processing all sensor data in real-time. The electronic system may be capable of filtering spurious values and analyzing all sensor data in real-time. The electronic system may execute a custom algorithm to evaluate data and determine the likelihood of an impending GLOF event. The electronic system may provide periodic transmission of a custom data packet with a 10-minute update rate controlled by a GPS-RTC synchronization scheme. The electronic system may provide periodic transmission of a custom data packet with a minute update rate in case the system identifies an emergency situation.

According to other aspects of the present disclosure, the echosounder sensor system may include a 200 kHz broadband transducer with built-in signal processing. The echosounder sensor system may provide National Marine Electronics Association (NMEA) 0183 output for depth and water temperature.

According to other aspects of the present disclosure, the navigation and buoy orientation sensor system may include a three-axis solid-state compass that provides reliable orientation information even in low temperature ranges. The navigation and buoy orientation sensor system may include a high-performance 3-axis digital accelerometer, 3-axis digital gyroscope, and 3-axis magnetometer with tilt detection capabilities and may communicate via I²C serial interface. The navigation and buoy orientation sensor system may provide orientation information including pitch, roll, and heading information.

According to other aspects of the present disclosure, the acoustic sensor and processing unit may detect and process sound levels generated by events such as ice calving, landslides, or other acoustic phenomena occurring near glacial lakes. The acoustic sensor and processing unit may capture sound through a microphone and process it to provide an RMS-equivalent DC voltage corresponding to sound intensity in decibels. The acoustic sensor and processing unit may incorporate a pre-amplifier stage to boost low-level microphone signals, followed by a low-pass filter to eliminate high-frequency noise.

According to other aspects of the present disclosure, the geo-location unit may be a high-precision, multi-band GNSS hardware module delivering centimeter-level accuracy.

According to other aspects of the present disclosure, the data concentrator and processing unit may include electronics hardware and firmware for receiving data from a multi-sensor arrangement. The data concentrator and processing unit may include electronics hardware and firmware for processing multi-sensor data sequentially at specified time intervals. The data concentrator and processing unit may include electronics hardware and firmware that evaluates the occurrence of a GLOF event using a custom algorithm. The data concentrator and processing unit may include electronics hardware and firmware wherein a user can configure certain parameters of the algorithm. The data concentrator and processing unit may include electronics hardware and firmware for configuration of a wireless communication unit. The data concentrator and processing unit may include electronics hardware and software required to receive multi-sensor data packets at baud rates spanning from 4800-115200. The data concentrator and processing unit may include electronics hardware and firmware required to transmit data packets at 115200 baud.

According to other aspects of the present disclosure, the wireless transmission unit may include electronics hardware that transmits data at a frequency of 2-8 GHz and sends data only after successful configuration of a satellite modem. The wireless transmission unit may include electronics hardware that transmits data at a frequency of 868 MHz with a baud rate of 115200.

The foregoing summary is illustrative only and is not intended to be in any way limiting. In addition to the illustrative aspects, embodiments, and features described above, further aspects, embodiments, and features will become apparent by reference to the drawings and the following detailed description.

The foregoing general description of the illustrative embodiments and the following detailed description thereof are merely exemplary aspects of the teachings of this disclosure and are not restrictive.

### BRIEF DESCRIPTION OF THE DRAWINGS

Features, aspects, and advantages of embodiments of the disclosure will be described below with reference to the accompanying drawings, in which like reference numerals denote like elements, and wherein:
FIG. 1 illustrates a block diagram of a system for glacial lake outburst flood monitoring and early warning, according to aspects of the present disclosure.
FIG. 2 illustrates a system level design of hardware for glacial lake outburst flood monitoring and early warning, according to aspects of the present disclosure.
FIG. 3 illustrates an execution flow diagram with a prediction algorithm for a glacial lake outburst flood early warning system, according to aspects of the present disclosure.
FIG. 4 illustrates a flowchart for normal mode operation of a glacial lake outburst flood early warning system, according to aspects of the present disclosure.
FIG. 5 illustrates a flowchart for emergency mode operation of a glacial lake outburst flood early warning system, according to aspects of the present disclosure.
FIG. 6 illustrates a flowchart of a method for glacial lake outburst flood monitoring and early warning, according to aspects of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

The following detailed description of example embodiments refers to the accompanying drawings. The present disclosure provides illustrations and descriptions but is not intended to be exhaustive or to limit the implementations to the precise form disclosed. Modifications and variations are possible in light of the present disclosure or may be acquired from practice of the implementations. Further, one or more features or components of one embodiment may be incorporated into or combined with another embodiment (or one or more features of another embodiment). Additionally, the flow chart and description of operations provided below relate to at least one of the embodiments in the present disclosure. It should be noted that it is possible to make other embodiments that do not exactly match the flowchart and its description. It is understood that in other embodiments one or more operations may be omitted, one or more operations may be added, one or more operations may be performed simultaneously (at least in part).

It will be apparent that systems and/or methods described herein may be implemented in different forms of hardware, software, or a combination of hardware and software. The actual specialized control hardware or software code used to implement these systems and/or methods should not limit their implementations. Thus, the operation and behavior of the systems and/or methods are described herein without reference to specific software code. It is understood that software and hardware may be designed to implement the systems and/or methods based on the description herein.

Even though particular combinations of features are recited in the claims and/or disclosed in the specification, the particular combinations are not intended to limit the disclosure of implementations. In fact, many of these features may be combined in ways not specifically recited in the claims and/or disclosed in the specification. Even if a dependent claim directly depends on only one claim, the present disclosure may indicate that the dependent claim is dependent on other claims in the claim set.

No element, act, or instruction used herein should be construed as critical or essential unless explicitly described as such. Also, as used herein, the articles "a" and "an" (in other words, nouns not mentioned in the plural) are intended to include one or more items and may be used interchangeably with "one or more." Also, as used herein, the terms "has," "have," "having," "include," "including," or the like are intended to be open-ended terms. Further, the phrase "based on" is intended to mean "based, at least in part, on" unless explicitly stated otherwise. Furthermore, expressions such as "at least one of [A] and [B]," "[A] and/or [B]," or "at least one of [A] or [B]" are to be understood as including only A, only B, or both A and B.

The present disclosure provides illustration and description but is not intended to be exhaustive or to limit the implementations to the precise form disclosed. Modifications and variations are possible in light of the above disclosure or may be acquired from practice of the implementations.

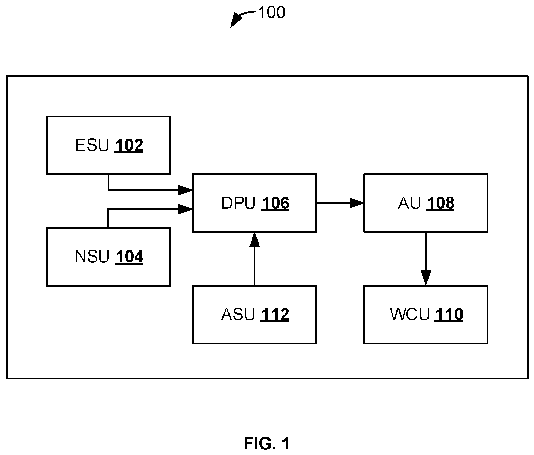

Referring to FIG. 1, a system 100 for glacial lake outburst flood (GLOF) monitoring and early warning is illustrated. The system 100 may comprise a multi-sensor instrumented buoy that monitors, predicts, and warns about impending GLOF events. The system 100 may include an echo sounder 102, a navigation sensor unit 104, a data concentrator and processing unit 106, a machine learning algorithm 108, a warning and console unit 110, and an acoustic sensor unit 112.

The echo sounder 102 may be positioned to sense changes in water levels by transmitting sound waves and measuring the time taken for an echo to return from the bottom of a glacial lake. The navigation sensor unit 104 may monitor orientation of the buoy. The acoustic sensor unit 112 may detect acoustic events that occur due to glacial outbursts and may provide data to the data concentrator and processing unit 106.

With continued reference to FIG. 1, the data concentrator and processing unit 106 may receive data from the echo sounder 102, the navigation sensor unit 104, and the acoustic sensor unit 112. The data concentrator and processing unit 106 may process the received sensor data and forward the processed data to the machine learning algorithm 108. The machine learning algorithm 108 may analyze variations in the sensor data to forecast potential GLOF events.

The warning and console unit 110 may receive warning information from the machine learning algorithm 108 and may transmit alerts to a central location via wireless means. In some aspects, the system 100 may work on a principle of acoustic technique by measuring repeatedly a depth of a glacial lake, a displacement along with orientation of the buoy, and a presence of an acoustic event. Combination of geo-spatial orientation of the buoy with environment sensing may facilitate analyzing and predicting a glacial event.

In some cases, the system 100 may comprise hardware parts and firmware parts. The system 100 may be implemented as an embedded platform capable of maintaining reliable operation across low-temperature environments. The system 100 may utilize sleep-mode power management techniques to minimize energy consumption during idle periods. In some aspects, the system 100 may employ a redundant architecture wherein an auxiliary or backup card takes control should a primary card fail, thereby increasing reliability of the system 100.

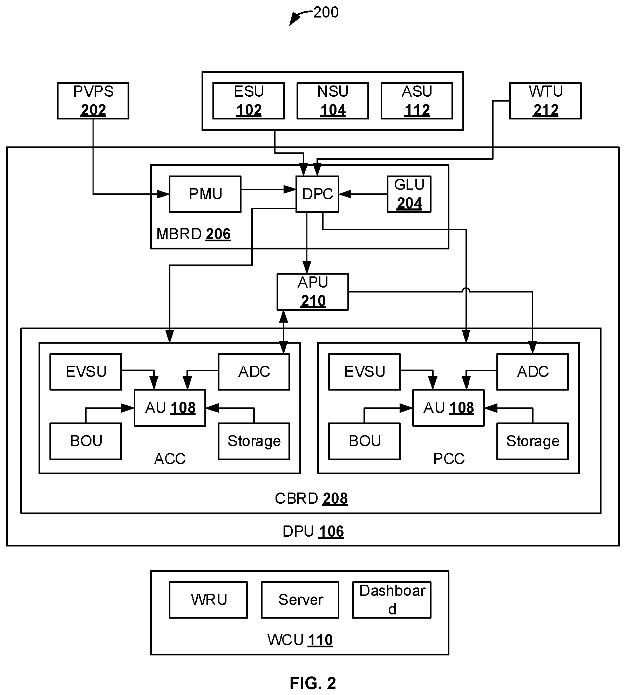

Referring to FIG. 2, a system level design 200 of hardware for glacial lake outburst flood (GLOF) monitoring and early warning is illustrated. The system 100, as illustrated in FIG. 1, may comprise a hierarchical architecture with multiple interconnected units arranged to facilitate data acquisition, processing, and transmission. The system level design 200 may illustrate the echo sounder 102, the navigation sensor unit 104, the data concentrator and processing unit 106, the machine learning algorithm 108, the warning and console unit 110, and the acoustic sensor unit 112, as illustrated in FIG. 1. Further, the system level design 200 may illustrate a photovoltaic power system 202, a geo-location unit 204, a motherboard 206, controller boards 208, an acoustic signal processing unit 210, a wireless transmission unit 212.

At a top level of the architecture, the system 100 may include the photovoltaic power system 202, the echo sounder 102, the navigation sensor unit 104, the acoustic sensor unit 112, and the wireless transmission unit 212. The photovoltaic power system 202 may provide power to the system 100 and may comprise solar panels, a charge controller, and a battery pack. The echo sounder 102 may sense changes in water levels by transmitting sound waves and measuring the time taken for an echo to return from a bottom of a glacial lake. The navigation sensor unit 104 may monitor orientation of a buoy. The acoustic sensor unit 112 may detect acoustic events that occur due to glacial outbursts.

With continued reference to FIG. 2, the data concentrator and processing unit 106 may serve as a central hub integrating the various components of the system 100. The data concentrator and processing unit 106 may include a motherboard 206 that serves as a common power distribution and communication hub. The motherboard 206 may integrate a power management unit, a datapath controller, and the geo-location unit 204. The geo-location unit 204 may be a high-precision, multi-band GNSS hardware module. The motherboard 206 may facilitate communication between external sensors and controller boards.

The data concentrator and processing unit 106 may further include controller boards 208 configured in a primary-auxiliary redundancy architecture. A primary controller card and an auxiliary controller card may each include an environmental sensor unit, an analog-to-digital converter, an arithmetic unit, a buoy orientation unit, and storage. The primary controller card may be responsible for normal system operation and may periodically transmit a heartbeat signal to the auxiliary controller card. The auxiliary controller card may continuously monitor the heartbeat signal to verify operational status of the primary controller card. If the heartbeat signal is not detected within a predefined timeout period, the auxiliary controller card may identify a primary controller failure and may automatically initiate a failover procedure to assume control of the system 100.

As further shown in FIG. 2, the acoustic signal processing unit 210 may connect to the controller boards 208 and may process acoustic data from the acoustic sensor unit 112. The acoustic signal processing unit 210 may capture sound through a microphone and may process the sound to provide an RMS-equivalent DC voltage corresponding to sound intensity in decibels. The acoustic signal processing unit 210 may incorporate a pre-amplifier stage to boost low-level microphone signals, followed by a low-pass filter to eliminate high-frequency noise.

The wireless transmission unit 212 may transmit data from the data concentrator and processing unit 106 to the warning and console unit 110. The wireless transmission unit 212 may include a satellite communication modem and a LoRa transceiver. In some aspects, the system 100 may employ a redundant transmission protocol wherein data is transmitted sequentially via the satellite modem and via LoRa.

With continued reference to FIG. 2, the warning and console unit 110 may be positioned at a bottom level of the architecture and may comprise a wireless receiver unit, a server, and a dashboard. The wireless receiver unit may be capable of receiving signals from both satellite and LoRa networks. The server may provide data storage capabilities. The dashboard may provide web-based monitoring with logging capabilities. The warning and console unit 110 may receive transmitted data from the wireless transmission unit 212 for monitoring and alert generation.

Referring to FIG. 2, an echo sounder 102 may be positioned at a top level of the system architecture. The echo sounder 102 may operate on a principle of transmitting sound waves from a bottom of a buoy and measuring a time taken for an echo to return from a bottom of a glacial lake. The echo sounder 102 may comprise a 200 kHz broadband transducer with built-in signal processing capabilities.

With continued reference to FIG. 2, the echo sounder 102 may calculate a depth of water based on a velocity of sound in water and a time taken for the echo to return. If a velocity of sound in water (v) is known, the time may be proportional to a distance travelled. A depth (d) of the water may be calculated by applying the equation: $d = \frac{vt}{2}$
where v represents the velocity of sound in water and t represents the time taken for the echo to return from the bottom of the glacial lake. The division by two accounts for the round-trip travel of the sound wave from the echo sounder 102 to the bottom of the glacial lake and back to the echo sounder 102.

The echo sounder 102 may provide output in NMEA 0183 format for depth and water temperature measurements. The NMEA 0183 format may facilitate standardized communication between the echo sounder 102 and the data concentrator and processing unit 106. Depth values obtained from the echo sounder 102 may be filtered to remove unwanted spurious readings. In some aspects, the filtering may be performed by the data concentrator and processing unit 106 to ensure accuracy of the depth measurements used for GLOF event detection and prediction.

Referring to FIG. 2, a navigation sensor unit 104 may be positioned at a top level of the system architecture. The navigation sensor unit 104 may be equipped with a three-axis solid-state compass that provides absolute orientation information. The three-axis solid-state compass may provide reliable orientation information even in low temperature ranges encountered in glacial lake environments.

With continued reference to FIG. 2, the navigation sensor unit 104 may include a high-performance 3-axis digital accelerometer, a 3-axis digital gyroscope, and a 3-axis magnetometer. The 3-axis digital accelerometer may measure linear acceleration along three orthogonal axes. The 3-axis digital gyroscope may measure angular velocity along three orthogonal axes. The 3-axis magnetometer may measure magnetic field strength along three orthogonal axes. In some aspects, the navigation sensor unit 104 may include tilt detection capabilities that facilitate determination of orientation deviations.

The navigation sensor unit 104 may communicate with the data concentrator and processing unit 106 via an I²C serial interface. The I²C serial interface may facilitate standardized communication between the navigation sensor unit 104 and the controller boards 208 of the data concentrator and processing unit 106. In some cases, the navigation sensor unit 104 may be connected to a microcontroller through the motherboard 206.

As further shown in FIG. 2, the navigation sensor unit 104 may provide orientation information including pitch, roll, and heading information. Pitch information may correspond to rotation about a lateral axis of the buoy. Roll information may correspond to rotation about a longitudinal axis of the buoy. Heading information may correspond to a compass direction in which the buoy is oriented. The orientation information provided by the navigation sensor unit 104 may facilitate analysis of orientation deviations under GLOF conditions.

In some aspects, the navigation sensor unit 104 may work in conjunction with a buoy orientation unit included in the controller boards 208. The buoy orientation unit may include a 6-axis inertial measurement unit that combines accelerometer and gyroscope data to provide relative motion information of the buoy. The combination of the navigation sensor unit 104 and the buoy orientation unit may enable accurate tracking of three-dimensional orientation changes, even during dynamic flood conditions.

Referring to FIG. 2, an acoustic sensor unit 112 may be positioned at a top level of the system architecture. The acoustic sensor unit 112 may detect and process sound levels generated by events such as ice calving, landslides, or other acoustic phenomena occurring near glacial lakes. The acoustic sensor unit 112 may comprise a microphone configured to capture acoustic signals in the environment surrounding the buoy.

With continued reference to FIG. 2, an acoustic signal processing unit 210 may connect to the controller boards 208 and may process acoustic data received from the acoustic sensor unit 112. The acoustic signal processing unit 210 may capture sound through the microphone of the acoustic sensor unit 112 and may process the captured sound to provide an RMS-equivalent DC voltage corresponding to sound intensity in decibels. The RMS-equivalent DC voltage may facilitate estimation of the decibel level of acoustic events by a microcontroller of the controller boards 208.

The acoustic signal processing unit 210 may incorporate multiple signal processing stages. A pre-amplifier stage may boost low-level microphone signals received from the acoustic sensor unit 112. A low-pass filter may follow the pre-amplifier stage and may eliminate high-frequency noise. In some aspects, the low-pass filter may have a cutoff frequency of 1.5 kHz. An RMS-to-DC conversion stage may follow the low-pass filter and may convert the filtered signal to a DC voltage level representative of sound intensity.

As further shown in FIG. 2, the acoustic signal processing unit 210 may offer three multiplexed output channels and one comparator output. The multiplexed output channels may allow selection between raw or processed audio signals for monitoring by a microcontroller of the controller boards 208. By monitoring either the DC voltage level or the raw acoustic signal through the multiplexer, the microcontroller may estimate the decibel level of an acoustic event and may respond accordingly.

The comparator output may be triggered when a sound level exceeds a preset threshold. The comparator output may act as a wake-up or alert signal. In some aspects, if an acoustic sensor unit 112 trigger is detected, the system 100 may give the trigger priority over a real-time clock wake-up and may transition into a monitoring mode. The analog inputs from the acoustic signal processing unit 210 may be connected to an onboard analog-to-digital converter (ADC) of the controller boards 208.

Referring to FIG. 2, a geo-location unit 204 may be integrated into a motherboard 206 of a data concentrator and processing unit 106. The geo-location unit 204 may be a high-precision, multi-constellation GNSS receiver designed to deliver centimeter-level accuracy while maintaining low power consumption. The geo-location unit 204 may receive signals from multiple global navigation satellite systems to determine a geographic position of a buoy deployed on a glacial lake.

With continued reference to FIG. 2, the geo-location unit 204 may be a multi-band GNSS hardware module. The multi-band capability may enable the geo-location unit 204 to receive satellite signals across multiple frequency bands, which may facilitate improved positioning accuracy and signal reliability. In some aspects, the geo-location unit 204 may provide location values that are read and extracted by controller boards 208 of the data concentrator and processing unit 106.

The geo-location unit 204 may provide time information in addition to location data. The time information provided by the geo-location unit 204 may be used to synchronize a real-time clock (RTC) of the system 100. In some cases, the system 100 may employ a GPS-RTC synchronization scheme wherein the geo-location unit 204 provides time data that is used to set the RTC and control periodic transmission of data packets. The system 100 may read data from the geo-location unit 204 and may extract time information to determine whether a scheduled data transmission interval has been reached.

As further shown in FIG. 2, the geo-location unit 204 may communicate with the controller boards 208 through the motherboard 206. The motherboard 206 may serve as a common power distribution and communication hub that facilitates data exchange between the geo-location unit 204 and the controller boards 208. In some aspects, the low power consumption of the geo-location unit 204 may complement sleep-mode power management techniques employed by the system 100 to minimize energy consumption during idle periods.

Referring to FIG. 2, a data concentrator and processing unit 106 may serve as a central hub for data acquisition, processing, and evaluation of emergency conditions based on sensor data in a time-synchronized manner. The data concentrator and processing unit 106 may comprise a motherboard 206 and controller boards 208 configured in a primary-auxiliary redundancy architecture.

With continued reference to FIG. 2, the motherboard 206 may serve as a common power distribution and communication hub for two controller cards. The motherboard 206 may facilitate switching of peripheral connections, such as external sensors, from a failed primary controller to an auxiliary controller. The motherboard 206 may integrate a geo-location unit 204 and Bluetooth Low Energy (BLE) sensors. The motherboard 206 may further integrate serial interface converters that facilitate communication between external sensors and the controller boards 208. A datapath controller based on multiplexers may be integrated into the motherboard 206 and may manage data routing between the various system components. A power management unit may be integrated into the motherboard 206 and may manage power distribution to the system components.

As further shown in FIG. 2, external sensors including an echo sounder 102, a navigation sensor unit 104, and an acoustic sensor unit 112 may be connected to a microcontroller through the motherboard 206. The motherboard 206 may provide standardized interfaces for receiving data from the external sensors and may route the received data to the controller boards 208 for processing.

Referring to FIG. 2, the controller boards 208 may be configured in a primary-auxiliary redundancy architecture. A primary controller card may be responsible for normal system operation and may periodically transmit a heartbeat signal to an auxiliary controller card (ACC). The auxiliary controller card may continuously monitor the heartbeat signal to verify operational status of the primary controller card. If the heartbeat signal is not detected within a predefined timeout period, the auxiliary controller card may identify a primary controller failure and may automatically initiate a failover procedure to assume control of the system 100.

With continued reference to FIG. 2, each controller board 10 may comprise an ARM-based microcontroller that serves as a computational component of the system 100. Each controller board 10 may include an onboard environmental sensor unit (EVSU) comprising pressure and temperature sensors. Each controller board 10 may further include a buoy orientation unit comprising a 6-axis inertial measurement unit that combines accelerometer and gyroscope data to provide relative motion information of a buoy. Each controller board 10 may include data storage in the form of an SD card or flash memory. Each controller board 10 may include an analog-to-digital converter that receives analog inputs from an acoustic signal processing unit 210.

As further shown in FIG. 2, the microcontroller of each controller board 10 may manage sensor data acquisition, extract values from received data, and execute custom algorithms. Backend algorithms executed by the microcontroller may monitor, evaluate, and compute results based on data received from all sensors connected to the system 100. The microcontroller may receive multi-sensor data packets at baud rates spanning from 4800 to 115200 and may transmit data packets at 115200 baud.

Referring to FIG. 2, a power management unit (PMU) may be integrated into a motherboard 206 of a data concentrator and processing unit 106. The power management unit may manage power distribution to system components and may provide redundancy to ensure reliable operation of the system 100.

With continued reference to FIG. 2, the power management unit may include two isolated power supplies. The two isolated power supplies may both be powered by a solar-charged battery of a photovoltaic power system 202. The dual isolated power supplies may provide redundancy to ensure reliability of power delivery to the system components. In some aspects, the power supplies may have a wide input voltage range to protect against battery voltage fluctuations.

The power management unit may further include a dual-channel power path controller. The dual-channel power path controller may manage selection between the two isolated power supplies. In some cases, the dual-channel power path controller may automatically switch to a backup power supply if a primary power supply fails. The automatic failover switching provided by the dual-channel power path controller may ensure continuous power delivery to the system components even in the event of a power supply failure.

As further shown in FIG. 2, the power management unit may distribute power from the photovoltaic power system 202 to the controller boards 208, the geo-location unit 204, and external sensors connected to the motherboard 206. The power management unit may work in conjunction with sleep-mode power management techniques employed by the system 100 to minimize energy consumption during idle periods. In some aspects, the low power consumption of system components may complement the power management capabilities of the power management unit to extend operational duration of the system 100 in remote glacial lake environments.

Referring to FIG. 2, controller boards 208 may be positioned within a data concentrator and processing unit 106 and may serve as computational components of the system 100. Each controller board 10 may comprise an ARM-based microcontroller that manages sensor data acquisition, value extraction, and algorithm execution.

With continued reference to FIG. 2, each controller board 10 may include an onboard environmental sensor unit. The environmental sensor unit may comprise pressure sensors and temperature sensors. The pressure sensors may measure atmospheric pressure in the environment surrounding a buoy. The temperature sensors may measure ambient temperature conditions. Data from the environmental sensor unit may be used to monitor environmental conditions at the glacial lake.

Each controller board 10 may further include a buoy orientation unit (BOU). The buoy orientation unit may comprise a 6-axis inertial measurement unit that combines accelerometer data and gyroscope data. The accelerometer data may provide linear acceleration measurements along three orthogonal axes. The gyroscope data may provide angular velocity measurements along three orthogonal axes. The combination of accelerometer data and gyroscope data may provide relative motion information of the buoy. The buoy orientation unit may enable accurate tracking of three-dimensional orientation changes, even during dynamic flood conditions.

As further shown in FIG. 2, each controller board 10 may include data storage. The data storage may be implemented via an SD card or flash memory. The data storage may provide persistent storage of collected sensor parameters. In some aspects, the system 100 may write multi-sensor datasets to the data storage to ensure data retention.

Each controller board 10 may include an analog-to-digital converter. The analog-to-digital converter may receive analog inputs from an acoustic signal processing unit 210. The analog-to-digital converter may convert analog voltage signals to digital values that may be processed by the microcontroller.

With continued reference to FIG. 2, the controller boards 208 may be configured in a primary-auxiliary redundancy architecture. A primary controller card (PCC) may be responsible for normal system operation. The primary controller card may periodically transmit a heartbeat signal to an auxiliary controller card. The heartbeat signal may indicate operational status of the primary controller card.

The auxiliary controller card may continuously monitor the heartbeat signal transmitted by the primary controller card. The auxiliary controller card may verify operational status of the primary controller card based on reception of the heartbeat signal. If the heartbeat signal is not detected within a predefined timeout period, the auxiliary controller card may identify a primary controller failure. Upon identification of the primary controller failure, the auxiliary controller card may automatically initiate a failover procedure to assume control of the system 100.

As further shown in FIG. 2, a motherboard 206 may facilitate switching of peripheral connections from a failed primary controller card to the auxiliary controller card. The peripheral connections may include connections to external sensors such as an echo sounder 102, a navigation sensor unit 104, and an acoustic sensor unit 112. The primary-auxiliary redundancy architecture may provide redundancy and may improve overall system reliability.

Referring to FIG. 2, a photovoltaic power system 202 may be positioned at a top level of the system architecture and may provide power to the system. The photovoltaic power system 202 may comprise four monocrystalline solar panels, a Maximum Power Point Tracking (MPPT) charge controller, a Battery Management System (BMS), and a Lithium Iron Phosphate (LFP) battery pack.

With continued reference to FIG. 2, the four monocrystalline solar panels may be configured in a series-parallel arrangement. The series-parallel configuration may increase system voltage while maintaining sufficient current capability. A combined solar output from the four monocrystalline solar panels may be fed into solar input terminals of the MPPT charge controller.

The MPPT charge controller may continuously track an optimal voltage-current operating point of the solar array to maximize energy harvesting under varying sunlight conditions. The MPPT charge controller may regulate a charging process for a battery system using a multi-stage adaptive charging algorithm. In some aspects, the MPPT charge controller may provide load control that prevents deep battery discharge by disconnecting a load at low battery voltage thresholds.

As further shown in FIG. 2, energy storage may be provided by a 4S LFP battery pack with a nominal voltage of 12.8V. The 4S LFP battery pack may be connected to battery terminals of the MPPT charge controller through the BMS. The BMS may monitor individual cell voltages, current, and temperature of the 4S LFP battery pack. The BMS may provide protection against over-voltage conditions, under-voltage conditions, over-current conditions, short circuits, and abnormal temperature conditions. In some cases, the BMS may support cell balancing to maintain uniform charge levels across individual cells of the 4S LFP battery pack.

With continued reference to FIG. 2, a load output voltage from the MPPT charge controller may be supplied to a power management unit integrated into a motherboard 206 of a data concentrator and processing unit 106. The power management unit may distribute power from the photovoltaic power system 202 to controller boards 208, a geo-location unit 204, and external sensors connected to the motherboard 206.

The MPPT charge controller may communicate with a microcontroller of the controller boards 208 via serial communication. The serial communication may enable real-time monitoring of solar panel parameters, battery status, charging state, and fault conditions. In some aspects, the microcontroller may read panel voltage, battery current, battery voltage, and load current parameters from the MPPT charge controller. The parameters obtained from the MPPT charge controller may be used as health parameters to determine system longevity.

Referring to FIG. 2, a wireless transmission unit 212 may be positioned at a top level of the system architecture and may transmit data from a data concentrator and processing unit 106 to a warning and console unit 110 (also referred to as warning and console unit (WCU)). The wireless transmission unit 212 may comprise a satellite communication modem and a LoRa transceiver to provide redundant communication pathways.

With continued reference to FIG. 2, the satellite communication modem of the wireless transmission unit 212 may operate at a frequency range of 2-8 GHz. The satellite communication modem may transmit data only after successful configuration of the satellite modem. The LoRa transceiver of the wireless transmission unit 212 may operate at a frequency of 868 MHz with a baud rate of 115200. In some aspects, LoRa may serve as a short-range communication channel compared to satellite communication and may be used for monitoring health and operational activity of a buoy.

The wireless transmission unit 212 may employ a redundant transmission protocol. In the redundant transmission protocol, data may be transmitted sequentially via the satellite communication modem and via the LoRa transceiver to the warning and console unit 110. The sequential transmission via both communication pathways may provide redundancy in case of transmission failure through one of the communication pathways.

As further shown in FIG. 2, the warning and console unit 110 may be positioned at a bottom level of the system architecture. The warning and console unit 110 may comprise a wireless receiver unit (WRU), a server, and a dashboard. The wireless receiver unit may be a wireless receiver modem capable of receiving signals from both satellite networks and LoRa networks. The dual reception capability of the wireless receiver unit may correspond to the redundant transmission protocol employed by the wireless transmission unit 212.

With continued reference to FIG. 2, the server of the warning and console unit 110 may provide data storage capabilities. The server may store data received from the wireless transmission unit 212 for analysis and record-keeping purposes. The dashboard of the warning and console unit 110 may provide web-based monitoring with logging capabilities. The web-based monitoring dashboard may enable remote monitoring of glacial lake conditions and system status.

The warning and console unit 110 may receive transmitted data from the wireless transmission unit 212 for monitoring and alert generation. In some cases, the warning and console unit 110 may receive warning information from the machine learning algorithm 108 and may transmit alerts to downstream communities and emergency response personnel. The combination of the wireless transmission unit 212 and the warning and console unit 110 may facilitate real-time communication between a buoy deployed on a glacial lake and a central monitoring location.

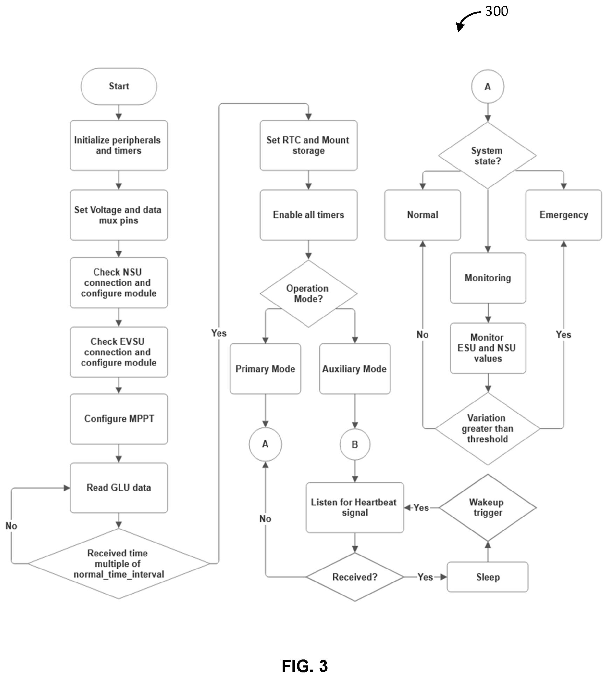

Referring to FIG. 3, an execution flow diagram with a prediction algorithm for a glacial lake outburst flood early warning system is illustrated. The system may operate in three operational states: normal mode, monitoring mode, and emergency mode. The system may utilize sleep-mode power management techniques to minimize energy consumption during idle periods. The embedded platform may be capable of maintaining reliable operation across low-temperature environments encountered in glacial lake deployments.

With continued reference to FIG. 3, a process may begin with system startup, where a controller board 10 initializes all peripherals and timers. The controller board 10 may configure voltage and data multiplexer pins and may verify communication with modules such as a navigation sensor unit 104 and an environmental sensor unit. The controller board 10 may configure the navigation sensor unit 104 and the environmental sensor unit if communication is verified. The controller board 10 may further configure a Maximum Power Point Tracking (MPPT) charge controller of a photovoltaic power system 202.

As further shown in FIG. 3, the controller board 10 may read data from a geo-location unit 204 and may extract time information from the received data. The controller board 10 may check whether a time received from the geo-location unit 204 is a multiple of a normal time interval. If the time received is not a multiple of the normal time interval, the controller board 10 may continue to read data from the geo-location unit 204. If the time received is a multiple of the normal time interval, the controller board 10 may set a real-time clock (RTC), mount storage, and enable all timers.

Referring to FIG. 3, once the RTC is configured, the controller board 10 may check an operational mode of the system. The operational mode may be either primary mode or auxiliary mode. In primary mode, the controller board 10 may proceed to check a current system state. The current system state may be one of normal mode, monitoring mode, or emergency mode. The current system state may be initialized to normal mode upon system startup.

With continued reference to FIG. 3, in normal mode, the controller board 10 may sequentially collect data from different subsystems. The controller board 10 may read and extract data from an echo sounder 102, the geo-location unit 204, and the navigation sensor unit 104 to obtain depth, location, and orientation values respectively. Depth values obtained from the echo sounder 102 may be filtered to remove unwanted spurious readings. The controller board 10 may obtain analog-to-digital converter measurements representing acoustic levels from an acoustic signal processing unit 210. The controller board 10 may read temperature and pressure values from the environmental sensor unit. The controller board 10 may read panel voltage, battery current, battery voltage, and load current parameters from the MPPT charge controller, which may be used as health parameters to determine system longevity.

As further shown in FIG. 3, after gathering sensor inputs, the controller board 10 may create a custom data frame. A wireless transmission unit 212 may be configured, and the controller board 10 may employ a redundant transmission protocol wherein data is transmitted sequentially via a satellite communication modem to a warning and console unit 110 and via a LoRa transceiver. The controller board 10 may write a multi-sensor dataset to storage modules to ensure persistent storage of collected parameters. The controller board 10 may subsequently enter a low-power sleep mode to minimize energy consumption until a next scheduled wake-up event. A device wakeup may be triggered by the RTC at a specified interval.

Referring to FIG. 3, if an acoustic sensor unit 112 trigger or a navigation sensor unit 104 trigger is detected, the controller board 10 may give the trigger priority over the RTC wake-up and may transition into monitoring mode. In monitoring mode, the controller board 10 may continuously monitor depth, orientation, and acoustic values received from the echo sounder 102, the navigation sensor unit 104, and the acoustic sensor unit 112 respectively. If variations in depth and orientation values are greater than a threshold, the controller board 10 may enter emergency mode to indicate a condition warranting heightened monitoring. If variations in depth and orientation values are not greater than the threshold, the controller board 10 may return to normal mode.

With continued reference to FIG. 3, in emergency mode, functionality of the controller board 10 may remain similar to normal mode, with a difference being that an RTC wake-up interval is reduced to a shorter time period. Once the controller board 10 enters emergency mode, the controller board 10 may remain in emergency mode for a prescribed duration and may transmit data to the warning and console unit 110 via wireless medium at shorter time intervals. After the prescribed duration, the controller board 10 may return to normal mode. All time frames and threshold values may be designed to be user-configurable.

As further shown in FIG. 3, in auxiliary mode, an auxiliary controller card may continuously monitor for a heartbeat signal transmitted by a primary controller card. If the heartbeat signal is received, the auxiliary controller card may enter sleep mode awaiting a next wake-up trigger. If the heartbeat signal is not received within a predefined time frame, the auxiliary controller card may assume a failure of the primary controller card and may enter primary mode of operation. The auxiliary controller card may transition toward active monitoring and operational control when the heartbeat signal is not detected, thereby providing redundancy and improving overall system reliability.

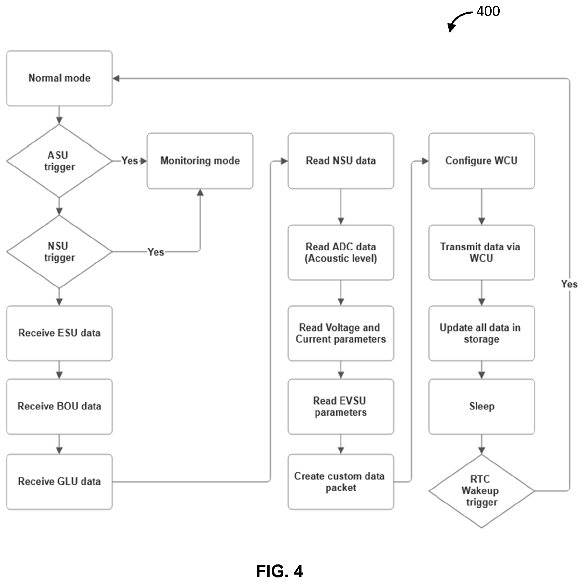

Referring to FIG. 4, a flowchart for normal mode operation of a glacial lake outburst flood early warning system is illustrated. In normal mode, a controller board 10 may transmit data packets at 10-minute intervals controlled by a GPS-RTC synchronization scheme. The GPS-RTC synchronization scheme may utilize time information from a geo-location unit 204 to control periodic transmission of custom data packets.

With continued reference to FIG. 4, the controller board 10 may check for trigger conditions from an acoustic sensor unit 112 and a navigation sensor unit 104. If an acoustic sensor unit 112 trigger is detected, the controller board 10 may transition to monitoring mode. If no acoustic sensor unit 112 trigger is detected, the controller board 10 may check for a navigation sensor unit 104 trigger. If a navigation sensor unit 104 trigger is detected, the controller board 10 may also transition to monitoring mode. The acoustic sensor unit 112 trigger and the navigation sensor unit 104 trigger may be given priority over a real-time clock (RTC) wake-up, causing the controller board 10 to wake up and transition into monitoring mode when such triggers are detected.

As further shown in FIG. 4, when in monitoring mode, the controller board 10 may perform a sequence of data acquisition steps. The controller board 10 may read data from the navigation sensor unit 104, followed by reading analog-to-digital converter data representing acoustic levels from an acoustic signal processing unit 210. The controller board 10 may read voltage and current parameters, and may subsequently read environmental sensor unit parameters including temperature and pressure values. The controller board 10 may create a custom data packet after gathering inputs from all sensors.

Referring to FIG. 4, in parallel with the monitoring mode data acquisition, the controller board 10 may receive data from external sources. The controller board 10 may receive data from an echo sounder 102, followed by receiving data from a buoy orientation unit, and may then receive data from the geo-location unit 204. Depth values obtained from the echo sounder 102 may be filtered to remove unwanted spurious readings.

With continued reference to FIG. 4, after creation of the custom data packet, the controller board 10 may configure a wireless transmission unit 212. The controller board 10 may transmit data via a warning and console unit 110. The controller board 10 may employ a redundant transmission protocol wherein data is transmitted sequentially via a satellite communication modem and via a LoRa transceiver to the warning and console unit 110. The controller board 10 may update all data in storage to ensure persistent storage of collected parameters. The controller board 10 may write a multi-sensor dataset to storage modules including an SD card or flash memory.

As further shown in FIG. 4, following data storage, the controller board 10 may enter a sleep state to minimize energy consumption during idle periods. A device wakeup may be triggered by an RTC wakeup trigger at a specified interval. Upon receiving the RTC wakeup trigger, the controller board 10 may return to normal mode, completing an operational cycle.

Referring to FIG. 4, in monitoring mode, the controller board 10 may continuously monitor depth, orientation, and acoustic values received from the echo sounder 102, the navigation sensor unit 104, and the acoustic sensor unit 112 respectively. If variations in depth and orientation values are greater than a threshold, the controller board 10 may transition to emergency mode to indicate a condition warranting heightened monitoring. If variations in depth and orientation values are not greater than the threshold, the controller board 10 may return to normal mode. All time frames and threshold values may be designed to be user-configurable.

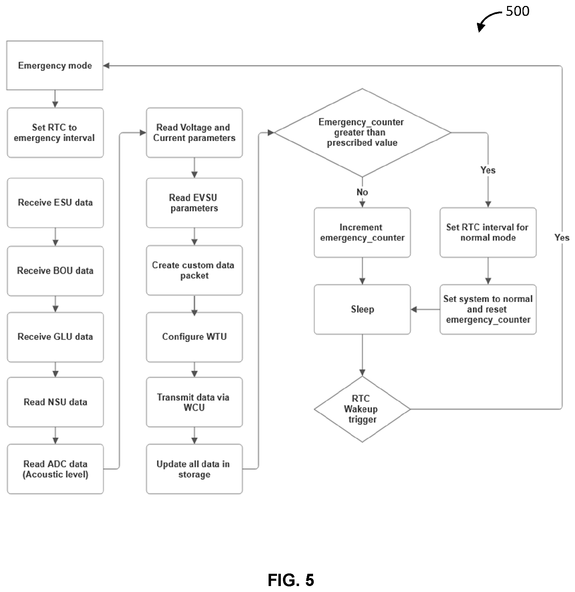

Referring to FIG. 5, a flowchart for emergency mode operation of a glacial lake outburst flood early warning system is illustrated. In emergency mode, functionality of a controller board 10 may remain similar to normal mode, with a difference being that a real-time clock (RTC) wake-up interval is reduced to a shorter time period. The reduced RTC wake-up interval may enable minute-rate data transmission to a warning and console unit 110 via a wireless transmission unit 212.

With continued reference to FIG. 5, when the controller board 10 enters emergency mode, the controller board 10 may set the RTC to an emergency interval. The controller board 10 may then proceed through a sequence of data acquisition steps. The controller board 10 may receive data from an echo sounder 102, followed by receiving data from a buoy orientation unit, and may then receive data from a geo-location unit 204. The controller board 10 may read data from a navigation sensor unit 104 and may read analog-to-digital converter data representing acoustic levels from an acoustic signal processing unit 210.

As further shown in FIG. 5, the controller board 10 may read voltage and current parameters and may read environmental sensor unit parameters including temperature and pressure values. The controller board 10 may create a custom data packet after gathering inputs from all sensors. The controller board 10 may support baud rates spanning from 4800 to 115200 for receiving multi-sensor data packets. The controller board 10 may transmit data packets at 115200 baud.

With continued reference to FIG. 5, the controller board 10 may configure the wireless transmission unit 212 and may transmit data via the warning and console unit 110. The controller board 10 may employ a redundant transmission protocol wherein data is transmitted sequentially via a satellite communication modem and via a LoRa transceiver to the warning and console unit 110. The controller board 10 may update all data in storage to ensure persistent storage of collected parameters.

Referring to FIG. 5, following data storage, the controller board 10 may evaluate whether an emergency counter is greater than a prescribed value. If the emergency counter does not exceed the prescribed value, the controller board 10 may increment the emergency counter and may enter a sleep state. The controller board 10 may await an RTC wakeup trigger, after which the controller board 10 may return to the beginning of the emergency mode operation cycle.

With continued reference to FIG. 5, if the emergency counter exceeds the prescribed value, the controller board 10 may set the RTC interval for normal mode, may set the system to normal mode, and may reset the emergency counter. The controller board 10 may then proceed to the sleep state and may await the RTC wakeup trigger before cycling back to normal mode operation. In some aspects, the controller board 10 may remain in emergency mode for one hour before returning to normal mode.

As further shown in FIG. 5, the emergency mode operation may provide a power-efficient emergency response mechanism where the system operates at reduced RTC intervals for enhanced monitoring frequency during potential glacial lake outburst flood events. The emergency counter mechanism may ensure that the system remains in emergency mode for a defined period before automatically transitioning back to normal mode operation. All time frames and threshold values may be designed to be user-configurable.

Referring to FIGS. 1 and 2, a glacial lake outburst flood (GLOF) monitoring and early warning system may integrate multiple sensor units, processing components, power management systems, and communication pathways to provide continuous monitoring, prediction, and warning capabilities. The system may be deployed as a multi-sensor instrumented buoy on a glacial lake surface, where the various components may work together to detect precursor events and transmit warning information to downstream communities.

With continued reference to FIGS. 1 and 2, data flow within the system may originate from three primary sensor sources: an echo sounder 102, a navigation sensor unit 104, and an acoustic sensor unit 112. The echo sounder 102 may continuously transmit sound waves toward a bottom of a glacial lake and may measure time taken for echoes to return, thereby providing depth measurements indicative of water level changes. The navigation sensor unit 104 may provide orientation data including pitch, roll, and heading information that indicates displacement and movement of the buoy. The acoustic sensor unit 112 may detect acoustic events such as ice calving, landslides, or other phenomena that may precede a GLOF event.

As further shown in FIG. 2, sensor data from the echo sounder 102, the navigation sensor unit 104, and the acoustic sensor unit 112 may flow through a motherboard 206 of a data concentrator and processing unit 106. The motherboard 206 may serve as a common power distribution and communication hub that routes sensor data to controller boards 208 for processing. Serial interface converters integrated into the motherboard 206 may facilitate communication between the external sensors and the controller boards 208. A datapath controller based on multiplexers (DPC) may manage data routing between the various system components.

Referring to FIG. 2, the controller boards 208 may receive multi-sensor data packets at baud rates spanning from 4800 to 115200. A microcontroller of each controller board 10 may manage sensor data acquisition, extract values from received data packets, and execute custom algorithms. The microcontroller may filter depth values obtained from the echo sounder 102 to remove unwanted spurious readings. The microcontroller may obtain analog-to-digital converter measurements representing acoustic levels from an acoustic signal processing unit 210. The microcontroller may read temperature and pressure values from an environmental sensor unit and may read panel voltage, battery current, battery voltage, and load current parameters from a Maximum Power Point Tracking (MPPT) charge controller of a photovoltaic power system 202.

With continued reference to FIG. 2, after gathering sensor inputs, the controller board 10 may create a custom data frame containing the processed sensor data. The controller board 10 may configure a wireless transmission unit 212 and may employ a redundant transmission protocol wherein data is transmitted sequentially via a satellite communication modem and via a LoRa transceiver to a warning and console unit 110. The satellite communication modem may operate at a frequency range of 2-8 GHz, while the LoRa transceiver may operate at a frequency of 868 MHz with a baud rate of 115200. The sequential transmission via both communication pathways may provide redundancy in case of transmission failure through one of the communication pathways.

As further shown in FIG. 2, the warning and console unit 110 may comprise a wireless receiver unit capable of receiving signals from both satellite networks and LoRa networks. The warning and console unit 110 may further comprise a server with data storage capabilities and a dashboard providing web-based monitoring with logging capabilities. The warning and console unit 110 may receive transmitted data from the wireless transmission unit 212 for monitoring and alert generation. In some cases, LoRa may serve as a short-range communication channel compared to satellite communication and may be used for monitoring health and operational activity of the buoy.

Referring to FIG. 2, the system may employ a primary-auxiliary redundancy architecture to provide reliable operation. A primary controller card may be responsible for normal system operation and may periodically transmit a heartbeat signal to an auxiliary controller card. The auxiliary controller card may continuously monitor the heartbeat signal to verify operational status of the primary controller card. If the heartbeat signal is not detected within a predefined timeout period, the auxiliary controller card may identify a primary controller failure and may automatically initiate a failover procedure to assume control of the system. The motherboard 206 may facilitate switching of peripheral connections from the failed primary controller card to the auxiliary controller card.

With continued reference to FIG. 2, a power management unit integrated into the motherboard 206 may include two isolated power supplies, both powered by a solar-charged battery of the photovoltaic power system 202. The dual isolated power supplies may provide redundancy to ensure reliability of power delivery. A dual-channel power path controller may manage selection between the two isolated power supplies and may automatically switch to a backup power supply if a primary power supply fails. The power management unit may distribute power from the photovoltaic power system 202 to the controller boards 208, a geo-location unit 204, and external sensors connected to the motherboard 206.

Referring to FIG. 3, the system may operate in three operational states: normal mode, monitoring mode, and emergency mode. In normal mode, the controller board 10 may transmit data packets at 10-minute intervals controlled by a GPS-RTC synchronization scheme. The GPS-RTC synchronization scheme may utilize time information from the geo-location unit 204 to control periodic transmission of custom data packets. The controller board 10 may read data from the geo-location unit 204 and may extract time information to determine whether a scheduled data transmission interval has been reached.

With continued reference to FIG. 3, if an acoustic sensor unit 112 trigger or a navigation sensor unit 104 trigger is detected, the controller board 10 may give the trigger priority over a real-time clock (RTC) wake-up and may transition into monitoring mode. In monitoring mode, the controller board 10 may continuously monitor depth, orientation, and acoustic values received from the echo sounder 102, the navigation sensor unit 104, and the acoustic sensor unit 112 respectively. If variations in depth and orientation values are greater than a threshold, the controller board 10 may enter emergency mode to indicate a condition warranting heightened monitoring.

As further shown in FIGS. 3 and 5, in emergency mode, functionality of the controller board 10 may remain similar to normal mode, with a difference being that an RTC wake-up interval is reduced to a shorter time period. The reduced RTC wake-up interval may enable minute-rate data transmission to the warning and console unit 110 via the wireless transmission unit 212. Once the controller board 10 enters emergency mode, the controller board 10 may remain in emergency mode for a prescribed duration and may transmit data to the warning and console unit 110 via wireless medium at shorter time intervals. An emergency counter mechanism may ensure that the system remains in emergency mode for a defined period before automatically transitioning back to normal mode operation.

Referring to FIGS. 3 and 4, the system may utilize sleep-mode power management techniques to minimize energy consumption during idle periods. Following data transmission and storage operations, the controller board 10 may enter a low-power sleep mode until a next scheduled wake-up event. A device wakeup may be triggered by the RTC at a specified interval. The combination of sleep-mode power management with the photovoltaic power system 202 may extend operational duration of the system in remote glacial lake environments where access for maintenance may be limited.

With continued reference to FIG. 2, the integration of the geo-location unit 204 into the motherboard 206 may provide both location data and time synchronization capabilities. The geo-location unit 204 may be a high-precision, multi-band GNSS hardware module delivering centimeter-level accuracy. The time information provided by the geo-location unit 204 may be used to synchronize the RTC of the system and may control periodic transmission of data packets according to the GPS-RTC synchronization scheme.

As further shown in FIG. 2, the acoustic signal processing unit 210 may connect to the controller boards 208 and may process acoustic data from the acoustic sensor unit 112. The acoustic signal processing unit 210 may incorporate a pre-amplifier stage to boost low-level microphone signals, followed by a low-pass filter to eliminate high-frequency noise. A comparator output of the acoustic signal processing unit 210 may be triggered when a sound level exceeds a preset threshold, acting as a wake-up or alert signal that may cause the controller board 10 to transition into monitoring mode.

Referring to FIG. 2, the controller board 10 may write multi-sensor datasets to storage modules including an SD card or flash memory to ensure persistent storage of collected parameters. The data storage may provide a record of sensor measurements that may be used for analysis and record-keeping purposes. The combination of local data storage with wireless transmission to the warning and console unit 110 may provide redundancy in data preservation.

With continued reference to FIGS. 1 and 2, the integration of the echo sounder 102, the navigation sensor unit 104, the acoustic sensor unit 112, the data concentrator and processing unit 106, the wireless transmission unit 212, and the warning and console unit 110 may enable real-time monitoring, prediction, and early warning of GLOF events. The redundant architecture provided by the primary-auxiliary controller configuration, the dual power supplies, and the dual wireless transmission pathways may improve overall system reliability in remote glacial lake deployments. All time frames and threshold values may be designed to be user-configurable to accommodate varying deployment conditions and monitoring requirements.

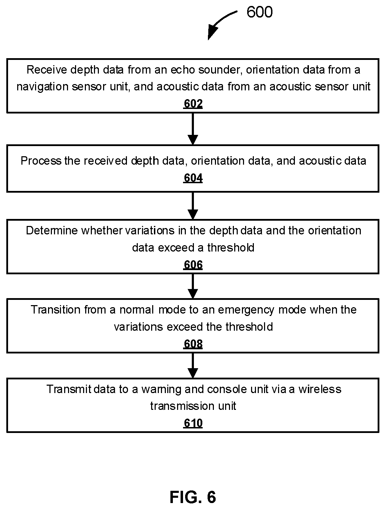

FIG. 6 illustrates a flowchart of a method for glacial lake outburst flood monitoring and early warning, according to aspects of the present disclosure.

As illustrated in FIG. 6, the method 600 may comprise one or more steps. The method 600 may be described in the general context of computer executable instructions. Generally, computer executable instructions can include routines, programs, objects, components, data structures, procedures, modules, and functions, which perform particular functions or implement particular abstract data types.

The order in which the method 600 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 602, a data concentrator and processing unit may receive depth data from an echo sounder, orientation data from a navigation sensor unit, and acoustic data from an acoustic sensor unit.

At step 604, the data concentrator and processing unit may process the received depth data, orientation data, and acoustic data.

At step 606, the data concentrator and processing unit may determine whether variations in the depth data and the orientation data exceed a threshold.

At step 608, the method 600 comprises transitioning from a normal mode to an emergency mode when the variations exceed the threshold.

At step 610, the method 600 comprises transmitting data to a warning and console unit via a wireless transmission unit.

Although the flowchart of FIG. 6 depicts processes from 602 to 610 as being continuously processed, the processing may be paused at each or any of these processes until approval is obtained from a user or other source. Furthermore, the results of each process may be output individually, or the results of multiple preceding processes may be collectively output at a certain process. Additionally, a subsequent process may be automatically initiated based on the result of a certain process, or the flow may be terminated based on the result of a certain process. For instance, it may be determined whether to proceed to the next process based on the first evaluation, and the flow may be terminated according to the determination result.

In a non-limiting embodiment of the present disclosure, one or more non-transitory computer-readable media may be utilized for implementing the embodiments consistent with the present disclosure. A computer-readable medium refers to any type of physical memory on which information or data readable by a processor may be stored. Thus, a computer-readable media may store one or more instructions for execution by the at least one processor, including instructions for causing the at least one processor to perform steps or stages consistent with the embodiments described herein. The term "computer-readable media" should be understood to include tangible items and exclude carrier waves and transient signals. By way of example, and not limitation, such computer-readable media can comprise Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

Thus, certain aspects may comprise a computer program product for performing the operations presented herein. For example, such a computer program product may comprise a computer readable media having instructions stored (and/or encoded) thereon, the instructions being executable by one or more processors to perform the operations described herein. For certain aspects, the computer program product may include packaging material.

The various illustrative logical blocks, units, and operations described in connection with the present disclosure may be implemented or performed with a general-purpose processor, discrete gate or transistor logic, discrete hardware components or any combination thereof designed to perform the functions described herein. A general-purpose processor may include a microprocessor, but in the alternative, the processor may include any commercially available processor, controller, microcontroller, or state machine. A processor may also be implemented as a combination of computing devices, e.g., a plurality of microprocessors, or any other such configuration.

The foregoing description of the specific embodiments will so fully reveal the general nature of the embodiments herein that others can, by applying current knowledge, readily modify or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A glacial lake outburst flood monitoring and early warning system, comprising:
an echo sounder configured to transmit sound waves toward a bottom of a glacial lake and measure a time taken for an echo to return, so as to provide depth measurements indicative of water level changes;
a navigation sensor unit configured to monitor orientation of a buoy and provide orientation data including pitch, roll, and heading information;
an acoustic sensor unit configured to detect acoustic events occurring near the glacial lake;
a data concentrator and processing unit configured to:
receive data from the echo sounder, the navigation sensor unit, and the acoustic sensor unit;
process the received data; and
evaluate variations in the received data to determine a likelihood of a glacial lake outburst flood event; and
a wireless transmission unit configured to transmit data from the data concentrator and processing unit to a warning and console unit.

2. The system of claim 1, wherein the data concentrator and processing unit comprises:
a motherboard configured to serve as a power distribution and communication hub; and
controller boards configured in a primary-auxiliary redundancy architecture, wherein a primary controller card periodically transmits a heartbeat signal to an auxiliary controller card, and wherein the auxiliary controller card is configured to assume control of the system when the heartbeat signal is not detected within a predefined timeout period.

3. The system of claim 2, wherein each controller board comprises:
an environmental sensor unit comprising pressure sensors and temperature sensors;
a buoy orientation unit comprising a 6-axis inertial measurement unit configured to provide relative motion information of the buoy;
an analog-to-digital converter configured to receive analog inputs from an acoustic signal processing unit; and
data storage.

4. The system of any one of the preceding claims, further comprising a photovoltaic power system comprising:
solar panels configured in a series-parallel arrangement;
a Maximum Power Point Tracking charge controller configured to track an optimal voltage-current operating point of the solar panels; and
a battery pack connected to the Maximum Power Point Tracking charge controller through a Battery Management System.

5. The system of any one of the preceding claims, wherein the echo sounder comprises a 200 kHz broadband transducer with built-in signal processing and provides output in National Marine Electronics Association (NMEA) 0183 format for depth and water temperature measurements, and/or wherein the navigation sensor unit comprises:
a three-axis solid-state compass configured to provide absolute orientation information;
a 3-axis digital accelerometer;
a 3-axis digital gyroscope; and
a 3-axis magnetometer with tilt detection capabilities.

6. The system of any one of the preceding claims, further comprising an acoustic signal processing unit configured to:
capture sound through a microphone of the acoustic sensor unit;
process the captured sound through a pre-amplifier stage and a low-pass filter; and
provide an RMS-equivalent DC voltage corresponding to sound intensity in decibels.

7. The system of claim 6, wherein the acoustic signal processing unit comprises a comparator output configured to be triggered when a sound level exceeds a preset threshold, the comparator output acting as a wake-up signal to transition the system into a monitoring mode.

8. The system of any one of the preceding claims, further comprising a geo-location unit configured to provide centimeter-level positioning accuracy and time information for synchronizing a real-time clock of the system, and/or wherein in the systems the wireless transmission unit comprises a satellite communication modem and a LoRa transceiver, and wherein the system employs a redundant transmission protocol wherein data is transmitted sequentially via the satellite communication modem and via the LoRa transceiver.

9. A method for glacial lake outburst flood monitoring and early warning, comprising:
receiving, by a data concentrator and processing unit, depth data from an echo sounder, orientation data from a navigation sensor unit, and acoustic data from an acoustic sensor unit;
processing, by the data concentrator and processing unit, the received depth data, orientation data, and acoustic data;
determining, by the data concentrator and processing unit, whether variations in the depth data and the orientation data exceed a threshold;
transitioning from a normal mode to an emergency mode when the variations exceed the threshold; and
transmitting data to a warning and console unit via a wireless transmission unit.

10. The method of claim 9, further comprising:
operating in the normal mode with a first data transmission interval controlled by a GPS-RTC synchronization scheme; and
operating in the emergency mode with a second data transmission interval shorter than the first data transmission interval.

11. The method of claims 9 or 10, further comprising:
detecting an acoustic sensor unit trigger or a navigation sensor unit trigger;
giving the trigger priority over a real-time clock wake-up; and
transitioning into a monitoring mode in response to the trigger, and /or wherein the method further comprises:
incrementing an emergency counter each time the system operates in the emergency mode;
determining whether the emergency counter exceeds a prescribed value; and
transitioning from the emergency mode to the normal mode and resetting the emergency counter when the emergency counter exceeds the prescribed value.

12. The method of any one of claims 9 to 11, further comprising:
transmitting, by a primary controller card, a heartbeat signal to an auxiliary controller card;
monitoring, by the auxiliary controller card, the heartbeat signal; and
initiating, by the auxiliary controller card, a failover procedure to assume control of the system when the heartbeat signal is not detected within a predefined timeout period, and/or wherein the method further comprises:
filtering depth values obtained from the echo sounder to remove spurious readings;
creating a custom data packet containing the processed depth data, orientation data, and acoustic data; and
writing the custom data packet to data storage.

13. A portable electronic device for glacial lake outburst flood monitoring, comprising:
a buoy deployable on a surface of a glacial lake;
an echo sounder mounted on the buoy and configured to measure depth of the glacial lake;
a navigation sensor unit mounted on the buoy and configured to provide orientation information of the buoy;
an acoustic sensor unit mounted on the buoy and configured to detect acoustic events;
a data concentrator and processing unit comprising:
a motherboard integrating a geo-location unit and a power management unit; and
controller boards configured to receive and process data from the echo sounder, the navigation sensor unit, and the acoustic sensor unit;
a wireless transmission unit configured to transmit processed data; and
a photovoltaic power system configured to provide power to the device.

14. The device of claim 13, wherein the controller boards are configured in a primary-auxiliary redundancy architecture, wherein a primary controller card is configured to periodically transmit a heartbeat signal to an auxiliary controller card, and wherein the auxiliary controller card is configured to monitor the heartbeat signal and assume control of the device when the heartbeat signal is not detected within a predefined timeout period.

15. The device of claims 13 or 14, wherein the data concentrator and processing unit is configured to operate in a normal mode, a monitoring mode, and an emergency mode, wherein in the normal mode data is transmitted at a first interval, and wherein in the emergency mode data is transmitted at a second interval shorter than the first interval, and/or wherein the power management unit comprises two isolated power supplies and a dual-channel power path controller configured to automatically switch to a backup power supply when a primary power supply fails.
